# EUROPÄISCHE PATENTANMELDUNG

(11) **EP 0 890 771 A2**
(43) Veröffentlichungstag der Anmeldung: **13.01.1999**
(21) Anmeldenummer: 98112488.6
(22) Anmeldetag: 06.07.1998
(51) Int. Cl.: F16L 15/04, F16L 15/08, F16L 41/02, F16L 47/00

(54) **Schraubverbindung für Rohrleitungen**

(30) Priorität: 11.07.1997 DE 19729849; 27.08.1997 DE 19737353
(71) Anmelder: Dürr Systems GmbH, 70435 Stuttgart (DE)
(72) Erfinder: Fodor, Mathias, 71686 Remseck (DE)
(74) Vertreter: Heusler, Wolfgang, Dipl.-Ing.

(57) **Zusammenfassung**

Eine Schraubverbindung für Rohrleitungen, in denen glatte stufenlose und spaltfreie Übergänge der Innenflächen wichtig sind, besteht aus einem mit den Innenflächen der zu verbindenden Leitungsrohre fluchtenden Zwischenrohrstück mit Hülsenteilen, in die das jeweilige Rohrende eingesetzt ist. In die Hülsenteile geschraubte Befestigungsschrauben drücken die Rohrenden über auf das Leitungsrohr aufgesetzte, in eine Nut in der Rohraußenfläche eingreifende Halbschalen axial gegen eine Dichtung an einer inneren radialen Stirnfläche des Zwischenrohrstücks.

## Beschreibung

Die Erfindung betrifft eine Schraubverbindung für Rohrleitungen gemäß dem Oberbegriff des Anspruchs 1.

Bei manchen Rohrleitungen ist es besonders wichtig, an den Verbindungsstellen zwischen zwei zu verbindenden Rohrenden stufenlose, spalt- und totraumfreie Übergänge der Leitungsinnenflächen zu gewährleisten, beispielsweise um Ablagerungen des durch die Leitung fließenden Materials zu verhindern und Spül- oder Reinigungsprobleme zu vermeiden. Wichtig ist auch ein glatter hindernisfreier Übergang mit kontinuierlich gleichbleibendem Innendurchmesser für Leitungen, die nicht nur gut spülbar, sondern auch mit einem Molch reinigbar sein müssen. Ferner müssen die Verbindungsstellen vollkommen dicht, stabil und zuverlässig und in manchen Fällen auch besonders druckfest sein. Ein typisches Beispiel für solche Rohr-leitungen, die molchbar sein und alle übrigen oben genannten Voraussetzungen erfüllen müssen, sind die Ring- und sonstigen Farbversorgungsleitungen in Beschichtungsanlagen zur Serienbeschichtung von Werkstücken.

In aus Stahl bestehenden Ringleitungen von Wasserlack-Beschichtungsanlagen für Kraftfahrzeugkarossen werden zu diesem Zweck Schraubverbindungen der eingangs genannten Gattung verwendet, bei denen an das Stirnende der Leitungsrohre je ein Zwischenrohrstück mit einem rohrförmigen Ende angeschweißt wird, so daß sich der gewünschte spaltfreie Übergang ergibt. Die beiden Zwischenrohrstücke werden ihrerseits mit einer auf einen Flanschteil des einen Rohrstücks geschraubten Mutter zusammengezogen, wobei auch zwischen den gegeneinanderstoßenden zylindrischen Innenflächen der beiden Zwischenrohrstücke ein glatter Übergang gewährleistet ist. Nachteilig ist aber das Erfordernis der Schweißverbindungen. Abgesehen von dem damit verbundenen Aufwand bei der Herstellung und Prüfung der Schweißnähte erfordern geschweißte Verbindungen spezielle Spül- und Passivierungs-programme (Entfetten, Passivieren mit Salpetersäure, Herausdrücken der Säure mit Druckluft, Neutralisierung mit Natronlauge). Außerdem sind Schweißverbindungen nicht ohne weiteres wieder lösbar, so daß nachträgliche Änderungen des Leitungssystems kaum oder nur unter beträchtlichen Schwierigkeiten möglich sind.

Der Erfindung liegt daher die Aufgabe zugrunde, eine Schraubverbindung für molchbare Rohrleitungen mit glatten, spaltfreien und stufenlosen Übergängen der Innenflächen anzugeben, bei der keine Schweißverbindung erforderlich ist.

Diese Aufgabe wird durch die im Anspruch 1 gekennzeichnete Schraubverbindung gelöst. Weiterbildungen und Ausgestaltungen der Erfindung sind in den Unteransprüchen angegeben.

Die Erfindung hat den Vorteil, daß die Schraubverbindung bei Gewährleistung der gewünschten Flächenübergänge schnell und einfach unter Verwendung einfacher Bauteile herstellbar ist. Zur Montage werden keine Schmiermittel benötigt. Vor allem entfällt der bei Schweißverbindungen erforderliche Prüf- und Reinigungsaufwand. Ferner sind problemlos nachträgliche Änderungen des Rohrleitungssystems möglich, da die Demontage der Schraubverbindung ebenso einfach ist wie die Montage.

Diese Vorteile sind nicht nur für das erwähnte Beispiel eines Leitungssystems für Beschichtungsanlagen relevant, sondern auch für andere Anwendungsfälle, bei denen ähnliche Probleme auftreten, z.B. bei Leitungen für die Lebensmittelindustrie.

Die Erfindung eignet sich nicht nur für die einfache Verbindung von zwei Leitungsrohren, sondern auch für den Anschluß von zwei Rohren einer Hauptrohrleitung wie z.B. der Ringleitung einer Beschichtungsanlage und des Rohres einer abgehenden Leitung an das T-Stück einer Rohrverzweigungsanordnung. In diesem Fall kann ein Absperrorgan für die abgehende Leitung vorteilhaft derart in das T-Stück eingebaut werden, daß sein Dichtkörper, etwa das Küken eines Kugelhahns, in der Schließstellung an der Öffnung der Innenfläche des Längsteils des T-Stücks angeordnet ist und dadurch ein wesentlicher Totraum zwischen dem Längsteil und dem Absperrorgan vermieden wird, der beim Spülen der Hauptleitung nicht mitgespült werden könnte.

An in der Zeichnung dargestellten Ausführungsbeispielen wird die Erfindung näher erläutert. Es zeigen:
- Fig. 1: eine teilweise geschnittene Gesamtansicht der hier beschriebenen Schraubverbindung;
- Fig. 2: einen vergrößerten Ausschnitt aus Fig. 1;
- Fig. 3: einen Schnitt durch die Detailansicht der Fig. 2 längs der Ebene A - A;
- Fig. 4: einen Längsschnitt durch eine Rohrverzweigungsanordnung gemaß einem zweiten Ausführungsbeispiel längs der Achsen der miteinander verbundenen Leitungsrohre; und
- Fig. 5: einen Querschnitt durch Fig. 4 längs der Ebene der Achse der abgehenden Leitung.

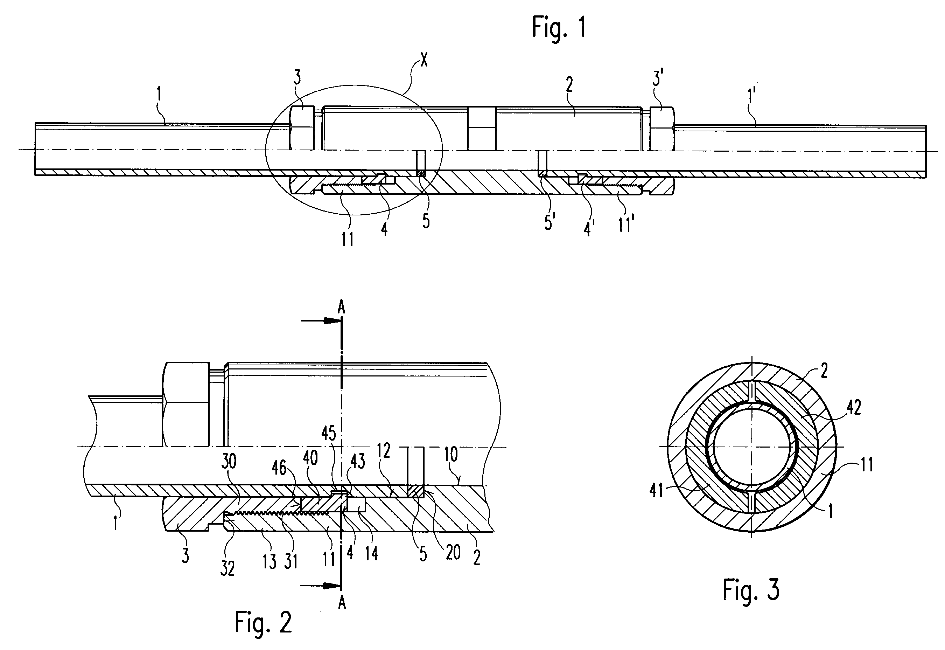

Wie in Fig. 1 erkennbar ist, sind zwei Leitungsrohre 1, 1' durch eine Schraubverbindung miteinander verbunden, die hauptsächlich aus einem zwischen die Stirnenden der beiden Rohre 1 bzw. 1' eingesetzten Zwischenrohrstück 2, je einer Befestigungsscbraube 3 bzw. 3' an jedem der beiden axialen Enden des Zwischenrohrstücks 2 und je einem am axial inneren Ende der Befestigungsschraube angeordneten, seinerseits aus zwei Halbschalen gebildeten Verbindungsbauteil 4 bzw. 4' besteht. Zwischen den Stirnenden der Rohre 1, 1' und dem Zwischenrohrstück 2 ist je ein Dichtungsring 5 bzw. 5' angeordnet. Die insgesamt zylindrische Verbindungsanordnung ist bei dem dargestellten Beispiel vollständig symmetrisch bezüglich einer quer zur Längsachse durch die Mitte der Anordnung verlaufenden Ebene.

Fig. 2 zeigt das in Fig. 1 durch das Oval X definierte Detail auf der einen Seite der Schraubverbindung.

Darstellungsgemäß besteht das Zwischenrohrstück 2 aus einem Mittelteil, dessen zylindrische Innenfläche 10 denselben Innendurchmesser hat wie das Leitungsrohr 1 und daher mit dessen Innenfläche fluchtet, und aus zwei an den beiden axialen Enden des Zwischenrohrstücks sich jeweils über das Leitungsrohr 1 und über das Verbindungsbauteil 4 erstreckenden Hülsenteilen 11 und 11' (vgl. Fig. 1). Ausgehend vom den Mittelteil verläuft die Kontur des Hülsenteils 11 in Achsrichtung stufenförmig mit jeweils achsparalellen zylindrischen Innenflächen. Zunächst erweitert sich der Innendurchmesser um einen der Wanddicke des Leitungsrohrs 1 entsprechenden Betrag, so daß das Leitungsrohr in der dadurch gebildeten Ausnehmung an der Innenfläche 12 anliegen kann und mit ihrer Stirnfläche der die erste Stufe bildenden Stirnfläche 20 des Zwischenrohrstücks 2 gegenübersteht. Zwischen dem sich anschließenden Teil 13 mit nochmals erweitertem Innendurchmesser und der Außenseite des Leitungsrohrs 1 ist ein Ringraum 14 gebildet, in dem der ringförmige Hauptteil 40 der das Verbindungsbauteil 4 bildenden Halbschalen sitzt. Axial nach außen anschließend an das Verbindungsbauteil 4 befindet sich in dem genannten Ringraum 14 der Zylinderteil 30 der Befestigungsschraube 3, mit dessen Außengewinde bei 31 ein Innengewinde im zylindrischen Teil 13 des Hülsenteils 11 in Eingriff steht. Die Befestigungsschraube 3 sitzt drehbar und axial verschiebbar auf dem Leitungsrohr 1.

Das durch die beiden Halbschalen 41 und 42 (Fig. 3) gebildete, ebenfalls auf dem Leitungsrohr sitzende ringförmige Verbindungsbauteil 4 dient zur zuverlässigen Schaffung eines Angriffspunkts an dem Leitungsrohr und greift zu diesem Zweck mit einem von seiner Innenfläche, also von dem erwähnten Hauptteil 40 radial nach innen vorspringenden flanschartigen Ringteil 43 in eine ringförmige Nut 45 ein, die in der Außenfläche des Leitungsrohres 1 gebildet ist. Die radial verlaufenden Flächen des Ringteils 43 und der diesem entsprechend breiten Nut 45 ermöglichen einen Formschluß zur Ausübung einer axialen Schiebekraft, die von dem Verbindungsbauteil 4 unter Einwirkung der Befestigungsschraube 3 zwischen dem Zwischenrohrstück 2 und dem Leitungsrohr 1 übertragen wird. Die Befestigungsschraube 3 drückt mit ihrer radial verlaufenden Stirnfläche am Ende ihres Zylinderteils 30 axial gegen die ebenfalls radiale Stirnfläche 46 an dem ihr zugewandten Ende des Hauptteils 40 des Verbindungsbauteils 4. Die Bewegung der Befestigungsschraube 3 in Richtung gegen das Zwischenrohrstück 2 wird durch einen Anschlag begrenzt, der durch eine von dem Zylinderteil 30 radial nach außen verlaufende Stirnfläche 32 der Befestigungsschraube gebildet wird, gegen die die ihr zugewandte Stirnfläche des Teils 13 des Hülsenteils 11 stößt.

Der schon erwähnte Dichtungsring 5, der in der dargestellten Lage zwischen den einander zugewandten Stirnflächen des Leitungsrohrs 1 und des Mittelteils des Zwischenrohrstücks 2 sitzt, hat vorzugsweise wenigstens annähernd rechteckigen Querschnitt und ist so bemessen, daß seine zylindrische Innenfläche mit denjenigen des Rohres 1 und des Zwischenrohrstücks 2 fluchtet, während seine Außenfläche an der stufenförmig erweiterten Innenfläche 12 anliegt. Der Dichtungsring kann aus einem hinreichend festen und elastischen Kunststoff wie beispielsweise PTFE bestehen, jedenfalls aber aus einem Werkstoff, der für das durch die Leitung fließende Fluid geeignet ist und z.B. nicht zum Aufquellen neigt. In gewissen Fällen könnte die Dichtung anstelle des gesonderten Ringes 5 auch durch die Stirnfläche des Zwischenrohrstücks selbst gebildet werden.

Zur Montage der Schraubverbindung werden zunächst die beiden Befestigungsschrauben 3 und 3' auf das jeweilige Leitungsrohr 1 bzw. 1' geschoben. Dann werden die beiden Halbschalen 41, 42 des jeweiligen Verbindungsbauteils 4 bzw. 4' auf die Leitungsrohre aufgesetzt und diese in die Hülsenteile 11 des Zwischenrohrstücks 3 eingeführt, in dem sich bereits die Dichtungsringe 5 befinden. Durch Einschrauben der Befestigungsschrauben 3, 3' in das jeweilige Hülsenteil 11 wird mittels des Verbindungsbauteils 4 das betreffende Leitungsrohr fest gegen den Dichtungsring 5 gedrückt. Der durch die Stirnfläche 32 gebildete Anschlag verhindert hierbei eine unerwünscht starke Quetschung der Dichtung.

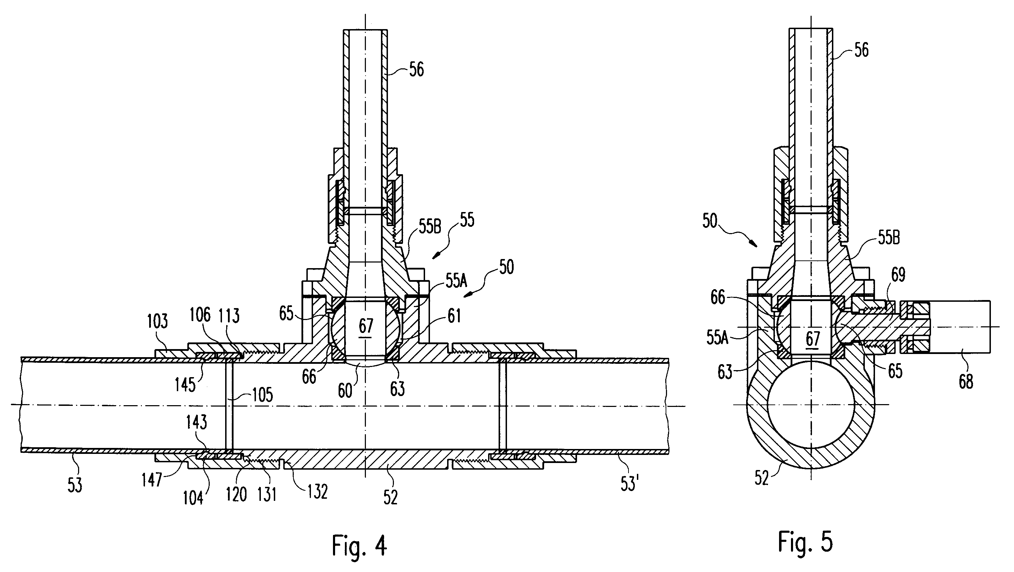

Ein anderes Ausführungsbeispiel ist in Fig. 4 und 5 dargestellt. Gemäß der Darstellung ist ein T-Stück 50 mit seinem rohrförmigen Längsteil 52 zwischen zwei Leitungsrohre 53, 53' einer Hauptrohrleitung eingesetzt, bei der es sich z.B. um eine aus Stahl bestehende Ringleitung für die Farbversorgung einer Beschichtungsanlage handeln kann. Das T-Stück 50 dient zur Materialentnahme aus der Hauptrohrleitung und ist zu diesem Zweck mit seinem allgemein rohrförmigen Querteil 55 an das Leitungsrohr 56 der abgehenden Leitung angeschlossen.

Das Querteil 55 des T-Stücks ist zweiteilig und besteht einerseits aus dem mit dem Längsteil 52 einstückig geformten Innenteil 55A und andererseits aus einem deckelartig auf die zur Längsteilachse parallele äußere Stirnfläche des Innenteils 55A geschraubten, allgemein rohrförmigen Außenteils 55B.

Der Weg aus dem Längsteil 52 in den Querteil 55 wird durch eine zylindrische Bohrung 60 gebildet, die an der Mitte des Längsteils 52 von dessen zylindrischer Innenfläche radial nach außen in einen sich erweiternden Innenraum 61 des Innenteils 55A führt. Am äußeren Ende des Innenteils 55A steht der Innenraum 61 darstellungsgemäß durch eine Öffnung mit dem Außenteil 55B in Verbindung. Am Rand der Bohrung 60 und der in den Außenteil 55B führenden Öffnung ist der Innenraum 61 jeweils mit einem Kugelsitz 63 versehen.

In den Querteil 55 des T-Stücks 50 ist ein Kugelhahn 65 eingebaut, der im wesentlichen durch das in dem Innenraum 61 des mit dem Längsteil 52 einstückigen Innenteils 55A sitzende, als Dichtkörper des Absperrorgans der abgehenden Leitung dienende kugelförmige Küken 66 gebildet wird. Das Küken 66 ist an einer im Querteil 55 gelagerten Welle 69 (Fig. 2) befestigt und mit dieser um eine quer zu den beiden Achsen des T-Stücks liegende Achse drehbar. Zum Drehen des Kükens 66 ist an der Welle 69 ein externer Handgriff 68 angeschraubt.

Der Hahn ist in der Zeichnung in seiner offenen Stellung gezeigt, in der die durch das Küken 66 führende Bohrung 67 parallel zur gemeinsamen Achse des Querteils 55 und der in den Längsteil 52 führenden Bohrung 60 liegt und mit der Bohrung 60 fluchtend den Weg aus der Hauptleitung in das Leitungsrohr 56 öffnet. Zum Schließen des Hahns wird das Küken 66 unter Verwendung des Handgriffs 68 um 90° aus der dargestellten Lage gedreht, so daß seine Bohrung 67 nun parallel zur Rohrachse des Längsteils 52 steht und das Küken 66 mit seinen Kugelflächen am einen Ende die durch die Bohrung 60 gebildete Öffnung der Innenfläche des Längsteils 52 und am entgegengesetzten Ende die in den Außenteil 55B führende Öffnung des Innenraums 61 dicht verschließt.

Wesentlich ist, daß das Küken 66 bei geschlossenem Kugelhahn einerseits nicht in den zylindrischen Innenraum des Längsteils 52 hineinragen soll, da die Hauptrohrleitung molchbar sein soll, andererseits aber die durch die Bohrung 60 gebildete Öffnung der Innenwand des Längsteils 52 möglichst weitgehend verschließt, so daß in der Bohrung 60 von der Hauptleitung aus nur ein minimaler Totraum zugänglich bleibt, der problemlos beim Spülen (und Molchen) der Hauptleitung erfaßt wird, im Gegensatz zu dem Totraum zwischen dem Längsteil des T-Stücks und dem Absperrorgan der abgehenden Leitungen bekannter Verzweigungsanordnungen. Zu diesem Zweck ist das Küken so positioniert, daß es in der Schließstellung mit seinem dem Innenraum des Längsteils 52 zugewandten Stirnende wenigstens annähernd mit der zylindrischen Innenfläche des Längsteils 52 fluchtet, d.h. auf der längs der Innenfläche durch die Mitte der Bohrung 60 verlaufenden Fluchtungslinie liegt.

Die Erfindung ist nicht auf das dargestellte Beispiel eines Kugelhahns beschränkt. Beispielsweise könnte auch ein zylindrisches Küken verwendet werden.

Bei diesem Ausführungsbeispiel wird die Schraubverbindung im wesentlichen durch eine Schraubmutter 103 und ein aus zwei Halbschalen (nicht dargestellt) bestehendes Verbindungsbauteil 104 gebildet. Die Schraubmutter 103 sitzt auf den mit ihren Innenflächen miteinander fluchtenden Enden des Leitungsrohres 53 und des Längsteils 52 und ist mit einem Innengewinde bei 131 auf ein Gewinde in der zylindrischen Außenseite des Längsteils 52 geschraubt. Das Längsteil 52 hat eine radial verlaufende Stufenfläche 120 zwischen seinem Gewindeteil bei 131 und seinem axialen Endteil 113, das einen kleineren Außendurchmesser als das Gewindeteil und dieselben Innen- und Außendurchmesser wie das Ende des Leitungsrohres 53 hat. Der Stufenfläche 120 steht axial fluchtend in einem gewissen Abstand eine innere Stufenfläche 147 der Schraubmutter 103 gegenüber, die zwischen dem das Innengewinde enthaltenden Teil der Mutter und deren auf dem Leitungsrohr 53 sitzenden Endteil radial nach innen verläuft. Der Innendurchmesser dieses dem T-Stück abgewandten Endteils der Schraubmutter 103 entspricht etwa dem Außendurchmesser des Leitungsrohres 53.

Das ringförmige, zur Bildung seiner beiden halbzylindrischen Schalen längs einer achsparallelen Ebene geteilte Verbindungsbauteil 104 sitzt auf dem Ende des Leitungsrohres 53 und greift mit einem von seiner zylindrischen Innenfläche radial nach innen vorspringenden flanschartigen Ringteil 143 in eine ringförmige Nut 145 ein, die in der Außenfläche des Leitungsrohres 53 gebildet ist, so daß das Verbindungsbauteil 104 zuverlässig formschlüssig an der Außenseite des Leitungsrohres 53 angreift. Gegen die dem T-Stück abgewandte radial verlaufende Endfläche des Verbindungsbauteils 104 drückt die innere Stufenfläche 147 der Schraubmutter 103, so daß das Leitungsrohr 53 durch die Wirkung der Schraubmutter gegen das T-Stück geschoben werden kann. Zwischen den durch die Schraubmutter 103 aneinandergedrückten Stirnenden des Leitungsrohres 53 und des Längsteils 52 sitzt ein Dichtungsring 105, der von einem zylindrischen Außenring 106 umgeben ist, welcher darstellungsgemäß in dem innerhalb der Schraubmutter 103 zwischen dem Verbindungsbauteil 104 und der Stufenfläche 120 des Längsteils 52 gebildeten Raum angeordnet ist.

Die Bewegung der Schraubmutter 103 in Richtung gegen das T-Stück und damit die axiale Beaufschlagung des Dichtungsrings 105 werden durch einen Anschlag begrenzt, der beispielsweise durch eine radiale Stirnfläche 132 in der Außenseite des T-Stücks gebildet sein kann, gegen die die Schraubmutter 103 mit ihrem dem T-Stück zugewandten Ende stößt. Stattdessen kann auch der Außenring 106 zur Bewegungsbegrenzung dienen.

Dieselbe Schraubverbindung ist an dem entgegengesetzten Ende des Längsteils 2 für das Leitungsrohr 53' und vorzugsweise auch an dem Außenteil 55B des Querteils 55 für das Leitungsrohr 56 vorgesehen.

## Patentansprüche

1. Schraubverbindung für Rohrleitungen
mit einem zwischen die Stirnenden der zu verbindenden Leitungsrohre (1) eingesetzten, mit einem Gewinde (31) versehenen Zwischenrohrstück (2), dessen zylindrische Innenfläche (10) mit den Innenflächen der Leitungsrohre (1) fluchtet und deren axiale Fortsetzung bildet,
wobei die Stirnfläche des Leitungsrohrs (1) einer Stirnfläche (20) des Zwischenrohrstücks (2) gegenübersteht, die von dessen mit der Leitungsrohrinnenfläche fluchtenden zylindrischen Innenfläche (10) radial nach außen verläuft,
und mit einer mit dem Zwischenrohrstück (2) verschraubten hohlzylindrischen Befestigungsschraube (3) zur Erzeugung der die Leitungsrohre (1) zusammenhaltendenden axialen Kraft,
**dadurch gekennzeichnet**, daß ein formschlüssig an der Außenseite des Leitungsrohrs (1) angreifendes Verbindungsbauteil (4) vorgesehen ist, mit dem das Leitungsrohr (1) durch die Wirkung der Befestigungsschraube (3) gegen das Zwischenrohrstück (2) verschiebbar ist.

2. Schraubverbindung nach Anspruch 1, **dadurch gekennzeichnet**, daß das Verbindungsbauteil (4) in eine Nut (45) in der Außenfläche des Leitungsrohrs (1) eingreift.

3. Schraubverbindung nach Anspruch 2, **dadurch gekennzeichnet**, daß das Verbindungsteil (4) ringförmig ist und aus mindestens zwei teilzylindrischen Schalen (41, 42) besteht, die mit ihrer halb- oder teilzylindrischen Innenfläche auf der Außenfläche des Leitungsrohrs (1) sitzen und mit einem von ihrer Innenfläche radial nach innen vorspringenden Ringteil (43) in die Nut (45) des Leitungsrohrs (1) eingreifen.

4. Schraubverbindung nach einem der vorangehenden Ansprüche, **dadurch gekennzeichnet**, daß auf beiden Seiten des Zwischenrohrstücks (2) je eine Befestigungsschraube (3, 3') und je ein an der Außenseite des betreffenden Leitungsrohrs (1, 1') angreifendes Verbindungsbauteil (4, 4') vorgesehen sind.

5. Schraubverbindung nach einem der vorangehenden Ansprüche, **dadurch gekennzeichnet**, daß die Befestigungsschraube (3) mit einer radial verlaufenden Stirnfläche in Achsrichtung gegen eine radial verlaufende Stirnfläche (46) des Verbindungsbauteils (4) drückt.

6. Schraubverbindung nach einem der vorangehenden Ansprüche, **dadurch gekennzeichnet**, daß sich zwischen der Stirnfläche des Leitungsrohrs (1) und dem Zwischenrohrstück (2) eine ringförmige Dichtung (5) befindet.

7. Schraubverbindung nach Anspruch 6, **dadurch gekennzeichnet**, daß die Dichtung durch einen Ring (5) mit wenigstens annähernd rechteckigem Querschnitt gebildet ist, dessen zylindrische Innenfläche mit den Innenflächen des Leitungsrohrs (1) und des Zwischenrohrstücks (2) fluchtet, und dessen Außenfläche auf einer axial verlaufenden zylindrischen Innenfläche (12) des Zwischenrohrstücks (2) aufliegt, die von dessen dem Leitungsrohrende gegenüberliegenden Stirnfläche (20) aus entlang der Leitungsrohraußenfläche verläuft.

8. Schraubverbindung nach einem der vorangehenden Ansprüche, **dadurch gekennzeichnet**, daß das Zwischenrohrstück (2) an seinen beiden axialen Enden sich über das jeweilige Leitungsrohr (1) und über das Verbindungsbauteil (4) erstreckende Hülsenteile (11, 11') hat.

9. Schraubverbindung nach Anspruch 8**, dadurch gekennzeichnet**, daß die Befestigungsschraube (3) mit ihrer zylindrischen Innenfläche drehbar auf der Außenseite des Leitungsrohrs (1) sitzt und mit einem Gewinde des Zwischenrohrstücks (2) in Eingriff steht.

10. Schraubverbindung nach einem der vorangehenden Ansprüche, **dadurch gekennzeichnet**, daß die Relativbewegung zwischen dem Zwischenrohrstück (2) und der Befestigungsschraube (3) und damit die Annäherung des Leitungsrohrendes an die Stirnfläche (20) des Zwischenrohrstücks (2) durch einen Anschlag (32) begrenzt ist.

11. Schraubverbindung nach einem der vorhergehenden Ansprüche für eine Rohrverzweigungsanordnung mit einem längs in eine Hauptrohrleitung (53, 53') eingesetzten oder einsetzbaren T-Stück (50), an das eine quer zur Richtung der Hauptrohrleitung abzweigende Rohrleitung (56) angeschlossen oder anschließbar ist, wobei eine Öffnung (60) der Innenfläche des Längsteils (52) des T-Stücks (50) in dessen Querteil (55) führt,
und mit einem Absperrorgan (65), dessen Dichtkörper (66) zum Schließen und Öffnen der abzweigenden Rohrleitung (56) bewegbar ist,
wobei das Absperrorgan (65) in das T-Stück (50) eingebaut ist und sein Dichtkörper (66) in der Schließstellung an der Öffnung (60) der Innenfläche des Längsteils (52) des T-Stücks (50) angeordnet ist.

12. Rohrverzweigungsanordnung nach Anspruch 11,
**dadurch gekennzeichnet**, daß als Dichtkörper das Küken (66) eines Absperrhahns (65) in das T-Stück (50) eingebaut ist und das Küken (66) mit seinem dem Innenraum des Längsteils (52) des T-Stücks zugewandten Stirnende mit der zylindrischen Innenfläche des Längsteils (52) fluchtet oder von dem Querteil (55) aus so nahe an der Fluchtungslinie liegt, daß in der verschlossenen Öffnung (60) kein wesentlicher Totraum verbleibt.

13. Rohrverzweigungsanordnung nach Anspruch 11 oder 12,
**dadurch gekennzeichnet**, daß das in das T-Stück (50) eingebaute Absperrorgan ein Kugelhahn (65) ist.

14. Rohrverzweigungsanordnung nach einem der Ansprüche 11 bis 13, **dadurch gekennzeichnet**, daß der Dichtkörper (16) an einer in dem Querteil (55) gelagerten Welle (69) befestigt und mit einem von außen betätigbaren Handgriff (68) in seine Öffnungs- und Schließstellungen drehbar ist.

15. Rohrverzweigungsanordnung nach einem der vorhergehenden Ansprüche,
**dadurch gekennzeichnet**, daß der Querteil (55) des T-Stücks (50) zweiteilig ist und in seinem mit dem Längsteil (52) einstückigen Innenteil (55A) das Absperrorgan (65) enthält, während sein entfernbar auf dieses Innenteil (55A) geschraubtes Außenteil (55B) mit den Mitteln zum Anschließen des abzweigenden Leitungsrohres (56) versehen ist.
